# FASCICULE DE BREVET EUROPEEN

(11) **EP 2 777 996 B1**
(45) Date de publication et mention de la délivrance du brevet: **08.07.2020**
(21) Numéro de dépôt: 14159948.0
(22) Date de dépôt: 14.03.2014
(51) Int. Cl.: B60S 1/48, B60S 1/52, F16L 53/00

(54) **DISPOSITIF DE DISTRIBUTION DE LIQUIDE LAVE-GLACE DE BALAIS D'ESSUIE-GLACE DE VÉHICULE AUTOMOBILE**
FLÜSSIGKEITSVERSORGUNGSVORRICHTUNG EINER WISCHANLAGE EINES KRAFTFAHRZEUGES
MOTOR VEHICLE WINDSCREEN WIPER FLUID DISTRIBUTION DEVICE

(30) Priorité: 14.03.2013 FR 1352250
(43) Date de publication de la demande: 17.09.2014
(73) Titulaire: Valeo Systèmes d'Essuyage, 78322 Le Mesnil Saint Denis (FR)
(72) Inventeur: Caillot, Gérald, 78720 Cernay la Ville (FR); Jarasson, Jean-Michel, 78321 Le Mesnil Saint Denis (FR); Izabel, Vincent, 91380 Chilly Mazarin (FR)
(74) Mandataire: Valeo Systèmes d'Essuyage

(56) Documents cités:
- EP-A2- 1 777 452
- WO-A1-2012/171804
- WO-A1-2013/092266
- US-A- 4 401 156
- US-A1- 2012 125 913
- US-A1- 2012 167 327

## Description

La présente invention est relative à un dispositif de distribution de liquide lave-glace pour balais d'essuie-glace de véhicule automobile dans lequel le liquide lave-glace est réchauffé/dégelé avant d'être projeté sur la surface vitrée du véhicule automobile.

Le balai d'essuie-glace comporte une ou deux rampes d'arrosage pourvues d'un ou d'une multitude de gicleurs ou orifices d'arrosage sous pression, permettant la distribution du liquide lave-glace sur la surface vitrée. Les gicleurs sont alimentés en liquide lave-glace contenu dans un réservoir par l'intermédiaire d'une pompe.

Lorsque la température extérieure est trop basse, par exemple en dessous de 5°C, on réchauffe/dégèle le liquide lave-glace. Pour cela, les conduites hydrauliques dans lesquelles circule le liquide lave-glace sont chauffées. Ainsi le liquide lave-glace est réchauffé et acheminé dans les conduites jusqu'au(x) rampes d'arrosage ou gicleur(s) sans obstacle dans le canal de circulation du liquide lave-glace.

De manière classique, le dispositif de distribution de liquide lave-glace comporte généralement une conduite hydraulique principale raccordée à une pompe de liquide lave-glace du véhicule automobile et deux conduites hydrauliques secondaires de balai d'essuie glace respectivement raccordées aux rampes d'arrosage des balais d'essuie-glace. La conduite hydraulique principale est disposée sous le capot du véhicule automobile, c'est-à-dire dans le compartiment moteur du véhicule automobile, tandis que les conduites hydrauliques secondaires des balais d'essuie-glace sont intégrées dans les bras d'essuie-glace, et sont par conséquent disposées principalement à l'extérieur du compartiment moteur.

Différents raccords hydrauliques sont prévus dans le dispositif de distribution de liquide lave-glace de manière à assurer l'interface entre la conduite hydraulique principale et les conduites hydrauliques secondaires, mais également l'interface desdites conduites avec les autres composants du dispositif de distribution.

On connait du document US 2012/0167327 A1. un dispositif de distribution de liquide lave-glace qui présente les caractéristiques du dispositif de distribution tel que défini dans le préambule de la revendication 1.

Dans les dispositifs de distribution dits chauffants, les conduites hydrauliques principale et/ou secondaires sont réchauffées mais une zone froide peut se créer dans la zone de jonction des conduites hydrauliques, pouvant perturber la circulation du liquide lave-glace en cas de gel, voire la bloquer totalement.

Un des buts de la présente invention est de pallier ces inconvénients en proposant un dispositif de distribution de liquide lave-glace amélioré, permettant d'éviter les zones froides notamment à la jonction entre la conduite hydraulique principale et les conduites hydrauliques secondaires, de faible coût, de faible encombrement qui soit également robuste et facile à assembler ou désassembler. Plus généralement, l'invention vise à éviter les zones froides au niveau des différents raccords hydrauliques du dispositif de distribution de liquide lave-glace.

A cet effet, la présente invention a pour objet un dispositif de distribution de liquide lave-glace de balais d'essuie-glace de véhicule automobile, comportant un réseau de distribution de liquide lave-glace ayant :
- au moins une conduite hydraulique comportant au moins un canal de circulation de liquide lave-glace,
- au moins un raccord hydraulique raccordé au canal de circulation, ledit dispositif de distribution comportant en outre au moins un organe thermoconducteur, en contact thermique d'une part avec au moins un raccord hydraulique, et d'autre part avec un élément chauffant du dispositif de
distribution, est ledit organe thermoconducteur(16 ;22 ;31; 33 ;39) comportant un moyen de retenue propre pour maintenir ledit organe thermoconducteur (16 ; 22 ;31 : 33 : 39) au réseau de distribution de liquide lave-glace; et étant en contact avec deux faces opposées du raccord hydraulique, ledit dispositif de distribution est caractérisé en ce que ledit organe thermoconducteur (16 : 22 : 31 : 33 : 39) est amovible, et en ce que le moyen de retenue comporte au moins une paire de pattes élastiques formant pince coopérant avec au moins un raccord hydraulique.

L'organe thermoconducteur assure ainsi le transfert de chaleur par conduction entre un élément chauffant et le raccord hydraulique pour réchauffer ce dernier. Le moyen de retenue de l'organe thermoconducteur participe au transfert de chaleur par conduction de chaleur en plus de sa fonction de maintien au réseau de distribution.

Ledit organe thermoconducteur est par exemple formé d'une seule pièce, par exemple en matériau métallique ou en plastique thermoconducteur.

Selon l'invention, ledit organe thermoconducteur est en contact avec deux faces opposées du raccord hydraulique. On accélère ainsi le réchauffement du raccord hydraulique en le réchauffant depuis ses deux extrémités opposées. C'est par exemple le moyen de retenue dudit organe thermoconducteur qui est en contact avec deux faces opposées du raccord hydraulique.

Selon un mode de réalisation, le moyen de retenue comporte au moins un clip configuré pour s'emboîter élastiquement sur une conduite hydraulique du réseau de distribution. Le clip permet que l'organe thermoconducteur soit bien maintenu à la conduite hydraulique principale tout en étant fixé simplement et de manière réversible.

Selon un autre mode de réalisation, le moyen de retenue comporte au moins une paire de pattes élastiques formant pince coopérant avec au moins un raccord hydraulique. Les extrémités des pattes élastiques sont par exemple conformées en capots pour coopérer par emboîtement élastique avec au moins un raccord hydraulique. En plus de la fonction de retenue propre de l'organe thermoconducteur, le moyen de retenue optimise le réchauffement du raccord hydraulique en transférant la chaleur de l'élément chauffant de part et d'autre du raccord hydraulique.

Ledit raccord hydraulique est par exemple un raccord de dérivation qui peut comporter un clapet anti-retour.

Selon un autre exemple, ledit raccord hydraulique est un adaptateur raccordant au moins un canal de circulation de la conduite hydraulique, par exemple secondaire, à au moins un raccord de dérivation. Par exemple, ledit moyen de retenue de l'organe thermoconducteur comporte au moins un arceau de verrouillage configuré pour s'emboîter élastiquement autour de l'adaptateur en verrouillant le raccordement de l'adaptateur avec le raccord de dérivation. En plus de la fonction de retenue de l'organe thermoconducteur, l'arceau de verrouillage verrouille le raccordement entre l'adaptateur et le raccord de dérivation et participe au transfert thermique. Par ailleurs, la forme en arceau optimise la surface d'échange entre l'adaptateur et l'organe thermoconducteur.

Selon un autre exemple, le raccord hydraulique est un raccord mâle permettant de raccorder au moins un canal de circulation d'une conduite hydraulique à un balai d'essuie-glace.

Selon un autre exemple, l'organe thermoconducteur comporte un logement recevant l'élément chauffant.

Selon un mode de réalisation, ledit élément chauffant est formé par des conducteurs chauffants se prolongeant hors du manchon de la conduite hydraulique. Ainsi, la chaleur déjà fournie par les conducteurs chauffants de la conduite hydraulique peut être réutilisée pour réchauffer le raccord hydraulique.

Selon un exemple de réalisation, ledit organe thermoconducteur comporte une protubérance autour de laquelle s'enroulent les conducteurs chauffants.

Selon un autre exemple, c'est le moyen de retenue de l'organe thermoconducteur qui est en contact thermique avec les conducteurs chauffants. La chaleur des conducteurs chauffants et celle emmagasinée par le manchon est ainsi apportée au raccord hydraulique pour assurer son dégivrage.

Selon un autre mode de réalisation, ledit élément chauffant est un élément rapporté, indépendant des conducteurs chauffants circulant au niveau des conduites hydrauliques. Par exemple, ledit élément chauffant comporte une thermistance et ledit organe thermoconducteur comporte un logement recevant l'élément chauffant. L'utilisation d'un élément chauffant indépendant des moyens de chauffage propres des conduites hydrauliques permet de réchauffer les raccords hydrauliques de conduites hydrauliques qui ne sont pas elles-mêmes réchauffées.

Une interface thermique peut être interposée entre ledit organe thermoconducteur et ledit élément chauffant, l'interface thermique enrobant de préférence ledit élément chauffant. L'interface thermique favorise l'échange thermique entre l'élément chauffant et l'organe thermoconducteur et maintient en position l'élément chauffant.

Selon un mode de réalisation dit « bi-rampe » pour des balais d'essuie-glace à deux rampes d'arrosage, ladite conduite hydraulique comporte deux canaux de circulation.

Ledit organe thermoconducteur peut présenter une languette thermoconductrice configurée pour s'insérer entre deux raccords hydrauliques. La languette thermoconductrice est formée par exemple par deux plaques en contact thermique avec une face d'un raccord hydraulique respectif. Les pattes élastiques du moyen de retenue sont par exemple agencées symétriquement de part et d'autre de la languette thermoconductrice agencée au centre. La languette thermoconductrice facilite l'apport de la chaleur entre les deux raccords hydrauliques.

L'organe thermoconducteur peut comporter une tête conformée en « H » configurée pour s'insérer entre deux canules d'un raccord mâle.

D'autres objets, caractéristiques et avantages de l'invention ressortiront de la description suivante, donnée à titre d'exemple, sans caractère limitatif, en regard des dessins annexés sur lesquels :
- la figure 1 représente une vue schématique d'éléments d'un dispositif de distribution de liquide lave-glace pour balai d'essuie-glace de véhicule automobile,
- la figure 2 représente un exemple de conduite hydraulique principale, pour un dispositif de distribution dit « mono-rampe »,
- la figure 3 représente une vue schématique d'éléments d'un dispositif de distribution de liquide lave-glace pour balai d'essuie-glace de véhicule automobile selon un premier mode de réalisation, pour un dispositif de distribution dit « bi-rampe »,
- la figure 4 représente une vue de face du dispositif de distribution de la figure 3,
- la figure 5 représente une vue en perspective de l'organe thermoconducteur représenté aux figures 3 et 4,
- la figure 6 représente une vue du dispositif de distribution de la figure 3 à l'état désassemblé, l'organe thermoconducteur étant en cours de montage dans le réseau de distribution,
- la figure 7 représente une vue schématique d'éléments d'un dispositif de distribution de liquide lave-glace pour balai d'essuie-glace de véhicule automobile selon un deuxième mode de réalisation,
- la figure 8 représente une vue de face d'éléments du dispositif de distribution de la figure 7,
- la figure 9a représente une vue en perspective de l'organe thermoconducteur des figures 7 et 8, et d'une thermistance en cours d'assemblage avec l'organe thermoconducteur,
- la figure 9b représente l'organe thermoconducteur de la figure 9a et la thermistance, assemblés,
- la figure 10 représente une vue du dispositif de distribution de la figure 7 à l'état désassemblé, l'organe thermoconducteur étant en cours de montage dans le réseau de distribution,
- la figure 11 représente une vue schématique d'éléments d'un dispositif de distribution de liquide lave-glace pour balai d'essuie-glace de véhicule automobile selon un troisième mode de réalisation,
- la figure 12 représente une vue de face d'éléments du dispositif de distribution de la figure 11,
- la figure 13a représente une vue en perspective de l'organe thermoconducteur représentés aux figures 11 et 12,
- la figure 13b représente l'organe thermoconducteur de la figure 13a et un conducteur chauffant de la conduite hydraulique principale, assemblés,
- la figure 14 représente une vue schématique d'éléments d'un dispositif de distribution de liquide lave-glace pour balai d'essuie-glace de véhicule automobile selon un quatrième mode de réalisation, dans lequel l'organe thermoconducteur se maintient à la conduite hydraulique secondaire et à un adaptateur,
- la figure 15 montre une conduite hydraulique secondaire du dispositif de distribution de liquide lave-glace représenté à la figure 14, pourvue d'un adaptateur et d'un thermoconducteur, et détachée des autres conduites hydrauliques du dispositif de distribution,
- la figure 16 représente une vue en perspective de l'organe thermoconducteur de la figure 15,
- la figure 17 représente une vue schématique d'éléments d'un dispositif de distribution de liquide lave-glace pour balai d'essuie-glace de véhicule automobile selon un cinquième mode de réalisation, dans lequel l'organe thermoconducteur se maintient à la conduite hydraulique secondaire et à un raccord mâle,
- la figure 18 représente une vue du dispositif de distribution de la figure 17 à l'état désassemblé, l'organe thermoconducteur étant à l'aplomb d'un raccord mâle, et
- la figure 19 représente une vue en perspective de l'organe thermoconducteur de la figure 18.

Sur ces figures, les éléments identiques portent les mêmes numéros de référence.

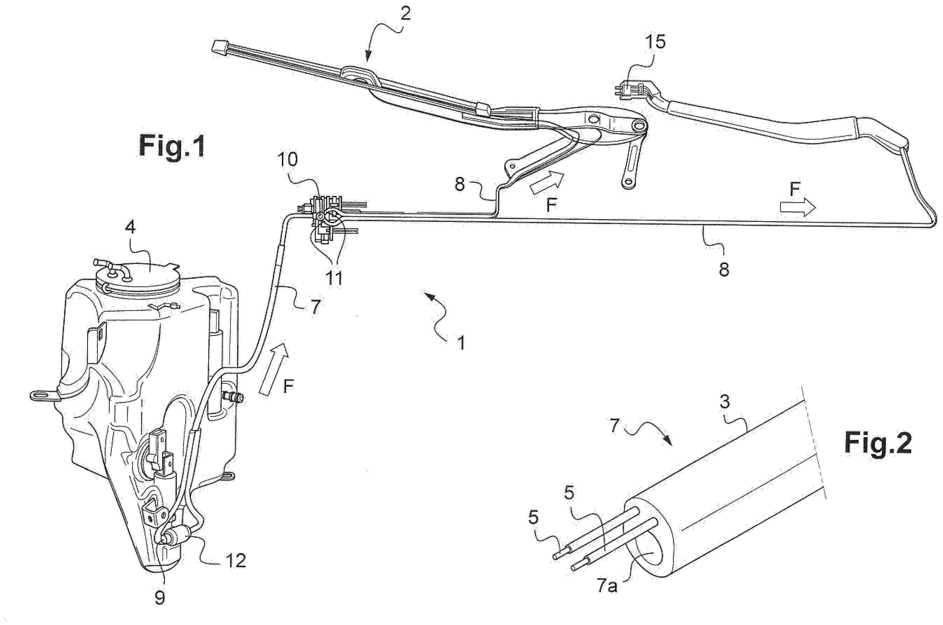

La figure 1 représente une vue schématique générale des éléments d'un dispositif de distribution de liquide lave-glace 1 pour balais d'essuie-glace 2 de véhicule automobile (un seul balai est représenté sur la figure 1).

Le dispositif de distribution de liquide lave-glace 1 représenté est adapté pour des balais d'essuie-glace à deux rampes d'arrosage (aussi appelé dispositif de distribution bi rampe) ou pour des balais d'essuie-glace à une seule rampe d'arrosage (ou dispositif de distribution mono rampe). Les balais d'essuie-glace à deux rampes présentent une rampe d'arrosage de chaque côté du balai d'essuie-glace, chaque rampe s'étendant selon la direction longitudinale du balai. Le liquide lave-glace est ainsi envoyé uniquement sur la partie avant du balai, c'est-à-dire que le liquide lave-glace est envoyé sur la rampe d'arrosage située du côté duquel le bras du balai d'essuie-glace avance pendant une phase montante du balayage et de l'autre côté pendant la phase descendante du balayage. Cet agencement permet d'essuyer instantanément le liquide lave-glace après son dépôt sur la surface vitrée, supprimant ainsi tout intervalle durant lequel la vision du conducteur aurait pu être réduite tout en gardant avantageusement la performance de lavage / nettoyage nécessaire.

Le dispositif de distribution de liquide lave-glace 1 comporte un réseau de distribution de liquide lave-glace ayant notamment une conduite hydraulique principale 7, deux conduites hydrauliques secondaires 8 et au moins un raccord hydraulique 9, 10, 11, 15.

Comme on peut le voir sur un exemple de réalisation représenté en figure 2, la conduite hydraulique principale 7 d'un dispositif de distribution dit « mono-rampe » comporte un manchon 3 dans lequel au moins un canal de circulation 7a est ménagé pour la circulation du liquide lave-glace. Le manchon 3 est en matériau souple, par exemple en caoutchouc. Le canal de circulation 7a est raccordé à une pompe de liquide lave-glace 12 du véhicule automobile, la pompe 12 étant elle-même raccordée à un réservoir 4 (figure 1).

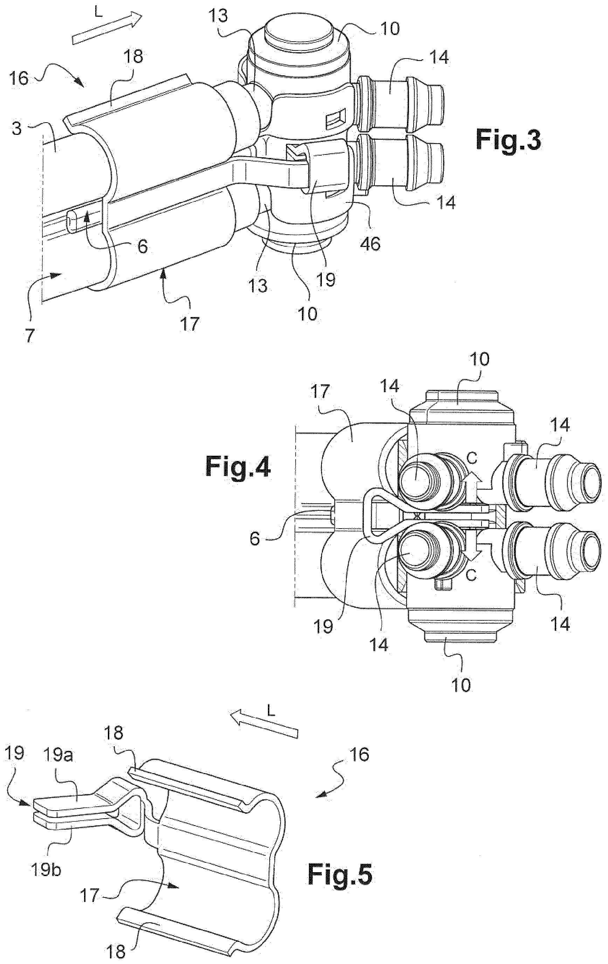

Dans le mode de réalisation bi-rampe pour des balais d'essuie-glace à deux rampes d'arrosage, la conduite hydraulique principale 7 comporte deux canaux de circulation (figures 1 et 3).

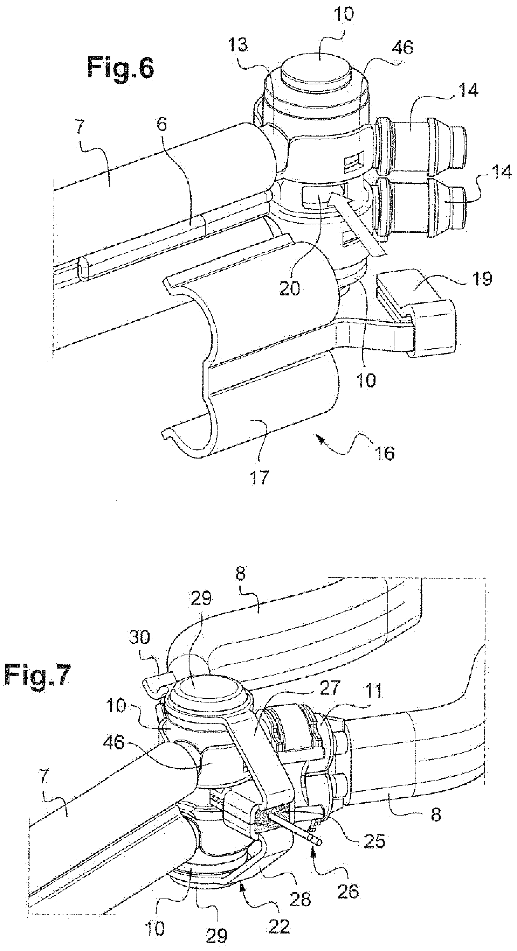

Les conduites hydrauliques secondaires 8 sont de même principe (voir par exemple la figure 7). Elles présentent respectivement au moins un canal de circulation et sont destinées à être raccordées à un balai d'essuie-glace 2 respectif.

En fonctionnement, le liquide lave-glace circule depuis le réservoir 4 vers les balais d'essuie-glace 2 selon les flèches F représentées sur la figure 1.

Selon un mode de réalisation particulier dit « chauffant », la conduite hydraulique principale 7 et/ou les conduites hydrauliques secondaires 8, comporte également au moins un conducteur chauffant 5, par exemple noyé dans la masse du manchon 3 (figure 2). Le conducteur chauffant 5 est par exemple introduit lors de l'extrusion du manchon 3. Le conducteur chauffant 5 est un fil résistif qui réchauffe le manchon 3 et ainsi, réchauffe le liquide lave-glace circulant dans le canal de circulation. Le liquide lave-glace est ainsi réchauffé lorsque la température extérieure est trop basse. De plus, étant donné que le fil résistif est logé dans le manchon, il ne constitue pas un obstacle à l'écoulement du liquide lave-glace dans le canal de circulation.

Dans le mode de réalisation bi-rampe pour des balais d'essuie-glace à deux rampes d'arrosage, les conducteurs chauffants 5 s'étendent dans le manchon 3 de la conduite hydraulique principale 7 et/ou secondaire 8 par exemple en passant entre les deux canaux de circulation.

Les conducteurs chauffants 5 sont connectés à une alimentation électrique par exemple côté pompe 12. A l'autre extrémité, c'est-à-dire du côté raccordé aux conduites hydrauliques secondaires 8, les conducteurs chauffants 5 sont connectés ensemble par un shunt électrique 6 pour fermer le circuit électrique. Le shunt 6 est agencé hors du manchon 3 comme visible sur la figure 6.

Parmi les raccords hydraulique du réseau de distribution, on distingue notamment le raccord de dérivation 10, l'adaptateur 11, le raccord mâle 15 et le connecteur de pompe 9.

Le raccord de dérivation 10 raccorde au moins un canal de circulation 7a, 7b de la conduite hydraulique principale 7 à au moins deux canaux de circulation 8a, 8b d'une conduite hydraulique secondaire 8 respective, comme représenté sur l'exemple de la figure 3.

Le raccord de dérivation 10 est par exemple un élément tubulaire en « T » ou en « Y » permettant la dérivation du liquide lave-glace depuis la conduite hydraulique principale 7 vers les deux conduites hydrauliques secondaires 8. Plus précisément, le raccord de dérivation 10 comporte en entrée, une canule 13 raccordée à un canal de circulation 7a de la conduite hydraulique principale 7 et en sortie, deux canules 14 respectivement raccordées à un canal de circulation 8a d'une conduite hydraulique secondaire 8.

Le raccord de dérivation 10 peut comporter un clapet anti-retour entre les canules d'entrée et les canules de sortie. Le clapet anti-retour permet le passage du liquide pompé dans le sens de circulation allant de la pompe vers la rampe et le blocage du retour du flux de liquide pompé dans l'autre sens, c'est-à-dire des balais vers la pompe. Le clapet anti-retour évite ainsi toute redescente de liquide des balais d'essuie-glace vers la pompe, notamment en phase d'arrêt de distribution de liquide dans un canal de circulation. Les clapets anti-retour comportent par exemple un corps de raccord de forme générale cylindrique. Il est bien entendu possible d'utiliser d'autres types de raccord hydraulique, sans clapets anti-retour, tels que des tubes en « T » ou en « Y » permettant simplement la circulation du liquide lave-glace des canaux de la conduite hydraulique principale 7 vers les canaux des conduites hydrauliques secondaires 8.

Dans le mode de réalisation bi-rampe pour des balais d'essuie-glace à deux rampes d'arrosage, le dispositif de distribution comporte deux raccords de dérivation 10, par exemple superposés l'un en dessus de l'autre de manière que les canules d'entrée 13 des raccords de dérivation 10 respectifs soient superposées en étant sensiblement parallèles entre elles et que les canules de sortie 14 des raccords de dérivation 10 respectifs soient également superposées en étant sensiblement parallèles entre elles. Les deux raccords de dérivation 10 sont indépendants l'un de l'autre mais peuvent être d'un seul tenant ou distincts (figure 3). Lorsqu'ils sont en deux parties distinctes, un élément de maintien 46 peut être agencé autour des deux raccords de dérivation 10 pour les maintenir ensemble. L'élément de maintien 46 présente par exemple une paroi latérale enveloppant partiellement les raccords de dérivation 10 et dont la forme présente des découpes pour le passage des canules d'entrée et sortie 13, 14. L'élément de maintien 46 comporte des moyens de fixation, tels que des orifices coopérant par encliquetage avec des ergots correspondants portés par les raccords de dérivation 10.

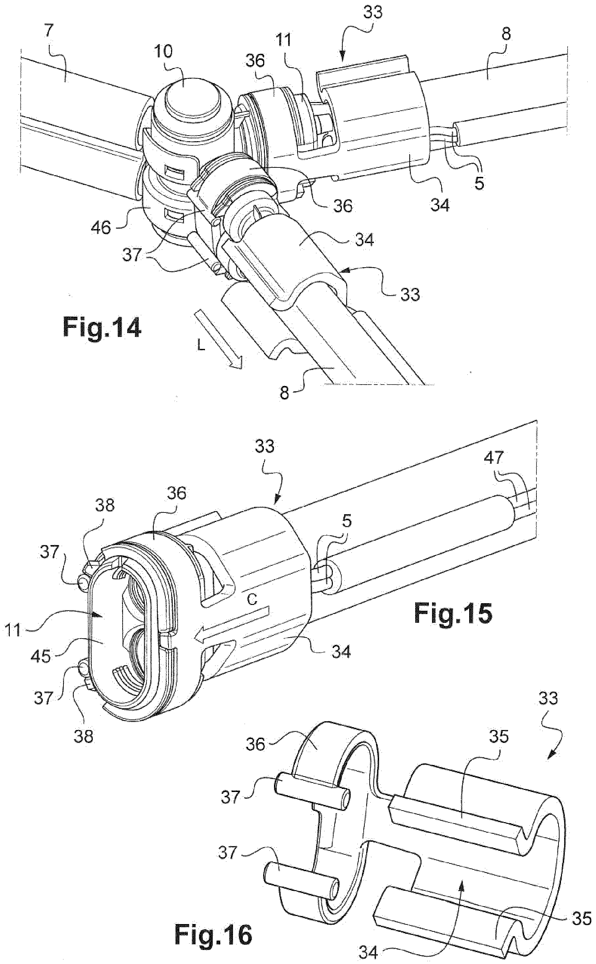

Un autre type de raccord hydraulique est l'adaptateur 11. Les adaptateurs 11 permettent de faciliter le raccordement d'au moins un raccord de dérivation 10 avec au moins un canal de circulation 8a, 8b d'une conduite hydraulique secondaire 8 (figures 7 et 14).

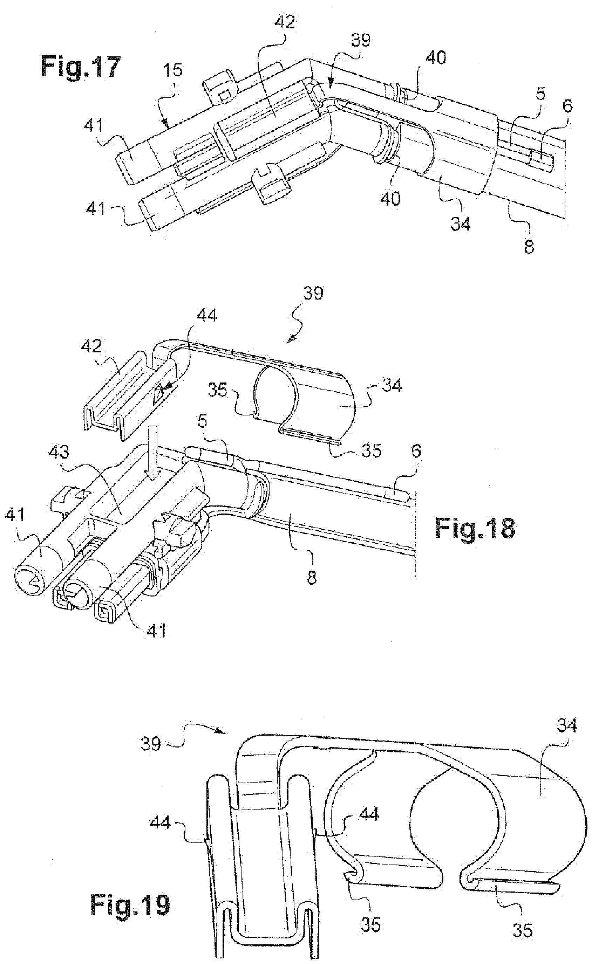

Un autre type de raccord hydraulique est le raccord mâle (figures 1 et 17). Le raccord mâle 15 permet de raccorder au moins un canal de circulation 8a, 8b d'une conduite hydraulique secondaire 8 à un balai d'essuie-glace 2.

Un autre type de raccord hydraulique est le connecteur de pompe 9 (figure 1).

Le dispositif de distribution de liquide lave-glace 1 comporte en outre au moins un organe thermoconducteur 16, 22, 31, 33, 39 en contact thermique d'une part avec au moins un raccord hydraulique 9, 10, 11, 15 et d'autre part avec un élément chauffant 5, 6, 21 du dispositif de distribution 1.

L'organe 16, 22, 31, 33, 39 est en matériau thermoconducteur tel qu'en matériau métallique ou en matériau plastique thermoconducteur. L'organe thermoconducteur 16, 22, 31, 33, 39 est formé d'une seule pièce, obtenu par exemple par pliage lorsqu'il est en matériau métallique tel qu'en tôle ou par injection/moulage lorsqu'il est réalisé en matériau plastique thermoconducteur.

On entend par « contact thermique » soit un contact direct sans intermédiaire : l'organe thermoconducteur 16, 22, 31, 33, 39 comporte ainsi une première partie plaquée contre une surface d'au moins un raccord hydraulique 9, 10, 11, 15 et une seconde partie plaquée contre un élément chauffant 5, 6, 21 ; soit un contact avec interposition entre l'organe thermoconducteur 16, 22, 31, 33, 39 et le raccord hydraulique 9, 10, 11, 15 et/ou l'élément chauffant 5, 6, 21 d'une interface thermiquement conductrice favorisant l'échange thermique telle qu'une résine thermoconductrice.

L'organe thermoconducteur 16, 22, 31, 33, 39 comporte un moyen de retenue propre pour se maintenir au réseau de distribution de liquide lave-glace, le moyen de retenue étant configuré pour que l'organe thermoconducteur 16, 22, 31, 33, 39 puisse être mis en contact thermique avec le raccord hydraulique 9, 10, 11, 15 après que le raccord hydraulique 9, 10, 11, 15 ait été raccordé aux canaux de circulation.

L'organe thermoconducteur 16, 22, 31, 33, 39 assure ainsi le transfert de chaleur par conduction entre un élément chauffant 5, 6, 21 et le raccord hydraulique 9, 10, 11, 15 pour réchauffer ce dernier. Le moyen de retenue de l'organe thermoconducteur 16, 22, 31, 33, 39 participe au transfert de chaleur par conduction de chaleur en plus de sa fonction de maintien au réseau de distribution.

Les figures 3 à 6 représentent des éléments d'un premier mode de réalisation du dispositif de distribution de liquide lave-glace pour balais d'essuie-glace de véhicule automobile.

Dans ce premier mode de réalisation, l'élément chauffant est formé par les conducteurs chauffants 5 de la conduite hydraulique principale 7, se prolongeant hors du manchon 3. Plus précisément, l'organe thermoconducteur 16 est en contact thermique avec les conducteurs chauffants 5, repliés latéralement à l'extérieur du manchon 3 (figure 3). Plus précisément, c'est le moyen de retenue dudit organe thermoconducteur 16 qui est en contact thermique avec les conducteurs chauffants 5, 6.

Dans ce premier mode de réalisation, l'organe thermoconducteur 16 se maintient à la conduite hydraulique principale 7.

En outre, l'organe thermoconducteur 16 est amovible. Pour cela, le moyen de retenue thermoconducteur est réalisé par exemple par clipsage.

Ainsi et comme représenté sur la figure 3, le moyen de retenue de l'organe thermoconducteur 16 comporte un clip 17 configuré pour s'emboîter élastiquement sur le manchon 3 de la conduite hydraulique principale 7 en enserrant les conducteurs chauffants 5, 6 de la conduite hydraulique principale 7. Le clip 17 est ainsi plaqué contre le shunt 6 agencé hors du manchon.

Dans le mode de réalisation particulier bi-rampe pour des balais d'essuie-glace à deux rampes d'arrosage représenté sur les figures 3 à 6, le clip 17 présente par exemple une forme générale sensiblement en « 3 », conformée pour coopérer avec un manchon 3 présentant une forme générale en « 8 », épousant les formes tubulaires des deux canaux de circulation. Le clip 17 s'étend longitudinalement dans la direction L de la conduite hydraulique principale 7 pour augmenter la surface d'échange avec le manchon 3 et améliorer la retenue au manchon 3.

Le moyen de retenue réalisé par clipsage peut être associé à un moyen de déboîtage comportant au moins une barrette d'écartement 18 du moyen de retenue. Ainsi, les extrémités du clip 17 se prolongent respectivement par une barrette d'écartement 18 s'étendant le long de l'arête longitudinale pour faciliter le déboîtage de l'organe thermoconducteur 16.

Par ailleurs, l'organe thermoconducteur 16 présente une languette thermoconductrice 19 configurée pour s'insérer entre les deux raccords de dérivation 10 superposés, comme représenté sur les figures 3 à 6.

La languette thermoconductrice 19 est par exemple formée de deux plaques 19a, 19b allongées, agencées parallèlement et conformées pour être plaquées contre les faces disposées en vis-à-vis et respectivement inférieures et supérieures des raccords de dérivation 10. Les plaques 19a, 19b se rejoignent entre elles et au clip 17 à une extrémité, et sont par exemple libres à l'autre extrémité. La languette thermoconductrice 19 est par exemple reliée au clip 17 par un prolongement central du clip 17 donnant de la souplesse à l'organe thermoconducteur 16 pour son montage au réseau.

On prévoit en outre que l'élément de maintien 46 présente une ouverture centrale 20 pour le passage de la languette thermoconductrice 19 entre les deux raccords de dérivation 10 (figure 4).

Au montage, l'organe thermoconducteur 16 est mis en contact thermique avec les raccords de dérivation 10 après le raccordement de ceux-ci à la conduite hydraulique principale 7 à laquelle l'organe thermoconducteur 16 s'emboîte, comme illustré sur la figure 6.

L'organe thermoconducteur 16 assure ainsi le transfert de chaleur par conduction entre les conducteurs chauffants 5, 6 de la conduite hydraulique principale 7 et les raccords de dérivation 10. Le transfert de chaleur par conduction entre l'organe thermoconducteur 16 et les raccords de dérivation 10 est représenté par les flèches C sur la figure 4. La chaleur des conducteurs chauffants 5, 6 et celle emmagasinée par le manchon 3 est ainsi apportée aux raccords de dérivation 10 pour assurer leur dégivrage.

La géométrie particulière du moyen de retenue permet que l'organe thermoconducteur 16 soit bien maintenu à la conduite hydraulique principale 7 et que la chaleur déjà fournie par les conducteurs chauffants 5, 6 et le manchon 3 de la conduite hydraulique principale 7 puisse être réutilisée pour réchauffer les raccords de dérivation 10. De plus, la languette thermoconductrice 19 permet de faciliter l'accès de la chaleur au centre de l'ensemble des deux raccords de dérivation 10.

Les figures 7, 8, 9a, 9b et 10 illustrent un deuxième mode de réalisation du dispositif de distribution.

Dans ce second mode de réalisation, l'élément chauffant est un élément distinct des éléments du réseau de distribution. Par exemple, l'élément chauffant comporte une thermistance 21 par exemple de type CTP (Coefficient de Température Positif ou PTC en anglais).

Dans ce deuxième mode de réalisation, le moyen de retenue retient l'organe thermoconducteur 22 au raccord hydraulique du réseau de distribution.

En outre, l'organe thermoconducteur 22 est en contact avec deux faces opposées du raccord hydraulique.

C'est par exemple le moyen de retenue de l'organe thermoconducteur 22 qui est en contact avec deux faces opposées du raccord hydraulique.

Le moyen de retenue comporte par exemple au moins une paire de pattes élastiques formant pince coopérant avec au moins un raccord hydraulique. Par exemple, les extrémités des pattes élastiques sont conformées en capots pour coopérer par emboîtement élastique avec au moins un raccord hydraulique.

Dans le mode de réalisation bi-rampe pour des balais d'essuie-glace à deux rampes d'arrosage illustré sur les figures 7 à 10, le moyen de retenue comporte ainsi une paire de pattes élastiques 27, 28 formant pince coopérant avec deux raccords de dérivation 10 superposés. Un capot 29 d'une patte élastique 27 coopère par emboîtement élastique avec un premier raccord de dérivation 10. Le capot 29 de la deuxième patte élastique 28 coopère avec le deuxième raccord de dérivation 10. Les capots 29 présentent ainsi une forme de disque et sont sensiblement parallèles entre eux et parallèles aux plaques 23a, 23b de la languette thermoconductrice 23.

Le moyen de retenue peut être associé à un moyen de déboîtage comportant au moins une barrette d'écartement 30 du moyen de retenue.

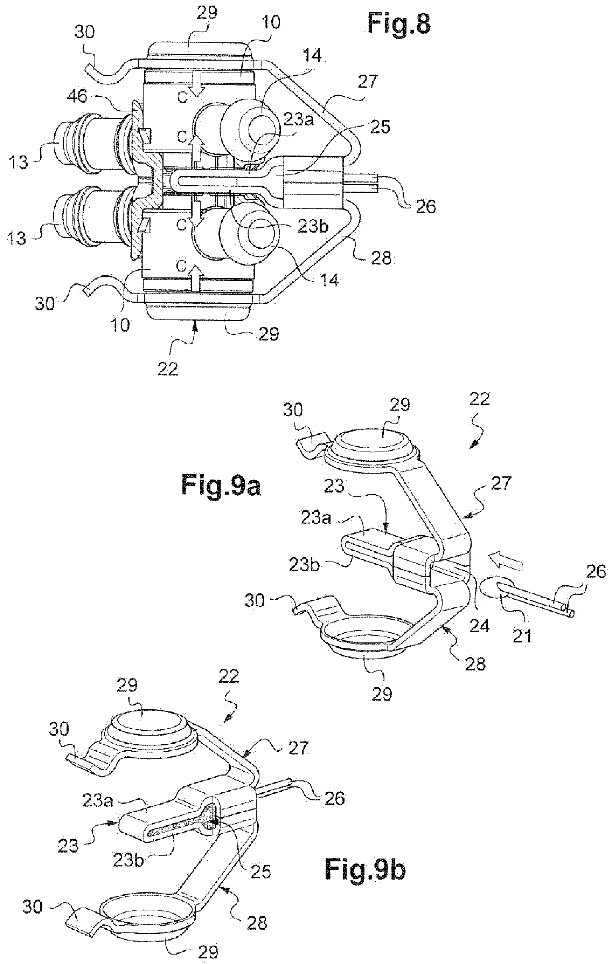

L'organe thermoconducteur 22 comporte également une languette thermoconductrice 23 configurée pour s'insérer entre les deux raccords de dérivation 10 (figure 8). La languette thermoconductrice 23 est par exemple disposée au centre, entre les deux pattes élastiques 27, 28 agencées symétriquement de part et d'autre de la languette thermoconductrice 23.

Comme précédemment, la languette thermoconductrice 23 est par exemple formée de deux plaques 23a, 23b allongées, agencées parallèlement et conformées pour être plaquées contre les faces disposées en vis-à-vis et respectivement inférieures et supérieures des raccords de dérivation 10.

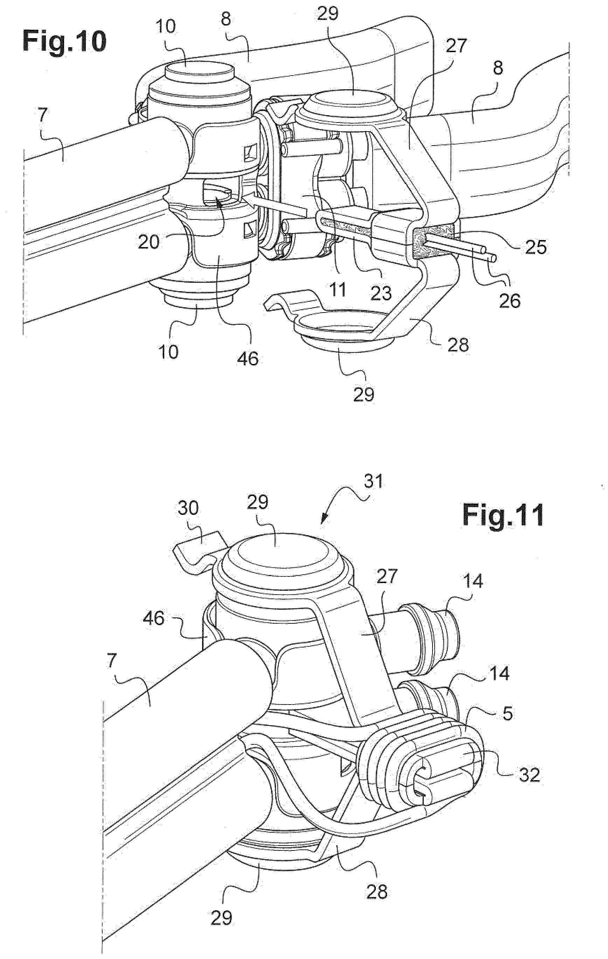

Dans cet exemple, les plaques 23a, 23b sont reliées entre elles à une première extrémité et sont reliées au moyen de retenue à l'extrémité opposée, par un cadre formant une ouverture 24 entre les plaques 23a, 23b recevant l'élément chauffant (figures 9a et 9b). Le logement ainsi délimité par les plaques 23a, 23b de la languette thermoconductrice 23 et par l'ouverture 24 reçoit une interface thermique 25, telle qu'une résine thermoconductrice (figure 9b), enrobant la thermistance 21 et en contact avec les parois internes du logement. L'interface thermique 25 favorise l'échange thermique entre la thermistance 21 et la languette thermoconductrice 23 et maintient en position la thermistance 21 dans le logement. La résine thermoconductrice est par exemple coulée dans le logement de la languette thermoconductrice 23 après la mise en place de la thermistance 21 en laissant les fils d'alimentation 26 de la thermistance apparents de manière à permettre leur raccordement (figure 10).

Au montage, l'organe thermoconducteur 22 est mis en contact thermique avec les raccords de dérivation 10 après le raccordement de ceux-ci aux conduites hydrauliques 7, 8, comme illustré sur la figure 10.

L'organe thermoconducteur 22 assure ainsi le transfert de chaleur par conduction entre la thermistance 21 et les raccords de dérivation 10. Le transfert de chaleur par conduction entre l'organe thermoconducteur 22 et les raccords de dérivation 10 est représenté par les flèches C sur la figure 8. L'organe thermoconducteur 22 transfère la chaleur de la thermistance 21 de part et d'autre des raccords de dérivation 10 pour assurer leur dégivrage à leurs extrémités grâce à la géométrie particulière du moyen de retenue, ainsi qu'entre les raccords de dérivation 10, grâce à la languette thermoconductrice 23. L'utilisation d'un élément chauffant indépendant des moyens de chauffage propres des conduites hydrauliques 7, 8 rend possible le chauffage de raccords hydrauliques de conduites hydrauliques qui ne sont pas elles-mêmes réchauffées.

Les figures 11, 12, 13a et 13b illustrent un troisième mode de réalisation du dispositif de distribution.

Dans ce troisième mode de réalisation, l'élément chauffant est formé par les conducteurs chauffants 5 se prolongeant hors du manchon 3.

Comme précédemment, l'organe thermoconducteur 31 comporte une languette thermoconductrice 23 et le moyen de retenue comporte une paire de pattes élastiques 27, 28 similaires au deuxième mode de réalisation pour se maintenir à au moins un raccord hydraulique.

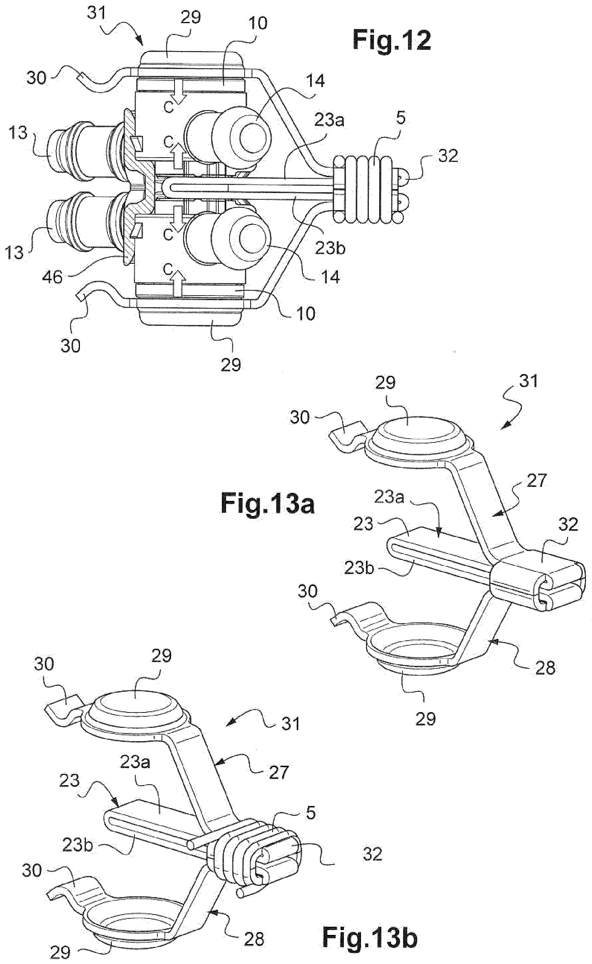

Dans ce troisième exemple, l'organe thermoconducteur 31 présente une protubérance 32, au dos de la languette thermoconductrice 23, et autour de laquelle les conducteurs chauffants 5 de la conduite hydraulique principale 7 sont enroulés en formant un ou plusieurs tours, comme illustré sur les figures 13a et 13b. L'ensemble formé par les conducteurs chauffants 5 enroulés autour de la protubérance 32 peut être encapsulé dans une interface thermique, telle qu'une résine thermoconductrice, pour les protéger et améliorer la conductivité thermique.

Au montage, l'organe thermoconducteur 31 est mis en contact thermique avec les raccords de dérivation 10 après le raccordement de ceux-ci à la conduite hydraulique principale 7 de laquelle les conducteurs chauffants 5 s'étendent, comme illustré sur la figure 11.

Le moyen de retenue participe ainsi au transfert de chaleur entre les raccords de dérivation 10 et l'élément chauffant 5 tout en fixant simplement et de manière réversible l'organe thermoconducteur 31.

Le transfert de chaleur par conduction entre l'organe thermoconducteur 31 et les raccords de dérivation 10 est représenté par les flèches C sur la figure 12. L'organe thermoconducteur 31 transfère la chaleur des conducteurs chauffants 5 de part et d'autre des raccords de dérivation 10 pour assurer leur dégivrage à leurs extrémités grâce à la géométrie particulière du moyen de retenue, ainsi qu'entre les raccords de dérivation 10, grâce à la languette thermoconductrice 23. La chaleur déjà fournie par les conducteurs chauffants 5 de la conduite hydraulique principale 7 peut être réutilisée pour réchauffer les raccords de dérivation 10.

Les figures 14 à 16 illustrent un quatrième mode de réalisation du dispositif de distribution.

Dans ce quatrième mode de réalisation, l'élément chauffant est formé par les conducteurs chauffants 5 de la conduite hydraulique secondaire 8, se prolongeant hors du manchon pour être raccordés aux câbles 47 d'une alimentation électrique (figure 15). C'est un des moyens de retenue de l'organe thermoconducteur 33 qui est en contact thermique avec les conducteurs chauffants 5.

Dans ce quatrième mode de réalisation, l'organe thermoconducteur 33 se maintient d'une part, à la conduite hydraulique secondaire 8 et d'autre part à un raccord hydraulique formé par un adaptateur 11.

L'adaptateur 11 comporte en sortie au moins une canule conformée pour s'insérer dans un canal de circulation d'une conduite hydraulique secondaire 8, et en entrée, un logement d'entrée 45 coopérant avec une canule 14 de raccord de dérivation 10. L'adaptateur 11 améliore ainsi l'étanchéité du raccordement entre le raccord de dérivation 10 et les conduites hydrauliques secondaires 8, et fournit un retour sensitif perceptible par l'opérateur lui garantissant un montage correct.

Le dispositif de distribution comporte ainsi deux organes thermoconducteur 33, un sur chaque adaptateur 11.

L'organe thermoconducteur 33 est par exemple réalisé par clipsage. Ainsi et comme représenté sur la figure 14, le moyen de retenue comporte un clip 34 configuré pour s'emboîter élastiquement sur le manchon 3 de la conduite hydraulique secondaire 8 en enserrant les conducteurs chauffants 5 de la conduite hydraulique secondaire 8.

Le clip 34 présente par exemple une forme générale sensiblement en « C », conformée pour coopérer avec un manchon 3 présentant une forme générale en « 0 ». Le clip 34 s'étend longitudinalement dans la direction L de la conduite hydraulique secondaire 8 pour augmenter la surface d'échange avec le manchon 3 et améliorer la retenue au manchon 3.

Le moyen de retenue réalisé par clipsage peut être associé à un moyen de déboîtage comportant au moins une barrette d'écartement 35 du moyen de retenue.

Par ailleurs, le moyen de retenue comporte un arceau de verrouillage 36 configuré pour s'emboîter élastiquement autour de l'adaptateur 11. Plus précisément, l'arceau de verrouillage 36 s'emboîte autour des parois extérieures du logement d'entrée 45. En plus des fonctions de retenue propre de l'organe thermoconducteur 33 et de transfert thermique, l'arceau de verrouillage 36 verrouille le raccordement entre l'adaptateur 11 et le raccord de dérivation 10. Par ailleurs, la forme en arceau optimise la surface d'échange entre l'adaptateur 11 et l'organe thermoconducteur 33.

Les extrémités de l'arceau de verrouillage 36 comportent un rouleau 37 coopérant par encliquetage avec des ergots 38 complémentaires portés par l'adaptateur 11, pour assurer le montage correct par une position stable de l'arceau de verrouillage 36.

Le clip 34 et l'arceau de verrouillage 36 sont reliés par une barrette de l'organe thermoconducteur 33, affinant localement l'organe thermoconducteur 33 facilitant ainsi le montage de l'organe thermoconducteur 33 au réseau.

Au montage, l'organe thermoconducteur 33 est mis en contact thermique avec les adaptateurs 11 après le raccordement de ceux-ci aux raccords de dérivation 10.

L'organe thermoconducteur 33 assure ainsi le transfert de chaleur par conduction entre les conducteurs chauffants 5 et l'adaptateur 11 (flèche C sur la figure 15). La chaleur des conducteurs chauffants 5 et celle emmagasinée par le manchon 3 est récupérée par le clip 34 pour être transmise à l'adaptateur 11 par l'arceau de verrouillage 36.

Les figures 17 à 19 illustrent un cinquième mode de réalisation du dispositif de distribution.

Dans ce cinquième mode de réalisation, l'élément chauffant est formé par les conducteurs chauffants 5 de la conduite hydraulique secondaire 8, se prolongeant hors du manchon 3. Plus précisément, l'organe thermoconducteur 39 est en contact thermique avec les conducteurs chauffants 5, 6 repliés latéralement à l'extérieur du manchon 3 (figure 17). C'est le moyen de retenue de l'organe thermoconducteur 39 qui est en contact thermique avec les conducteurs chauffants 5, 6.

Dans ce cinquième mode de réalisation, le moyen de retenue coopère avec la conduite hydraulique secondaire 8 pour maintenir l'organe thermoconducteur 39. Le dispositif de distribution comporte ainsi deux organes thermoconducteur 39, un sur chaque conduite hydraulique secondaire 8.

Le moyen de retenue de l'organe thermoconducteur 39 est par exemple réalisé par clipsage. Ainsi et comme représenté sur la figure 18, le moyen de retenue comporte un clip 34 configuré pour s'emboîter élastiquement sur le manchon 3 de la conduite hydraulique secondaire 8 en enserrant les conducteurs chauffants 5, 6 de la conduite hydraulique secondaire 8. Le clip 34 présente par exemple une forme générale sensiblement en « C » avec une barrette d'écartement 35 du moyen de retenue.

Par ailleurs, le raccord hydraulique est formé par un raccord mâle 15.

Le raccord mâle 15 comporte au moins une canule pour la circulation du liquide lave-glace, dont l'entrée 40 est insérée dans un canal de circulation d'une conduite hydraulique secondaire 8 et la sortie 41 est insérée dans un raccord femelle à liquide complémentaire du balai d'essuie-glace (non représenté). La canule peut être coudée.

Dans le mode de réalisation bi-rampe pour des balais d'essuie-glace à deux rampes d'arrosage, le raccord mâle 15 comporte deux canules agencées côte à côte et reliées transversalement (figures 17 et 18).

Dans le mode de réalisation chauffant, le raccord mâle 15 peut être réchauffé, par exemple par les conducteurs chauffants 5 s'étendant hors du manchon 3 des conduites hydrauliques secondaires 8.

Par ailleurs l'organe thermoconducteur 39 comporte une tête 42 dont la section transversale est conformée en « H ». La tête 42 est configurée pour s'insérer dans une cavité complémentaire 43 du raccord mâle 15, ménagée entre les canules. Une fois la tête 42 insérée dans la cavité 43, les ailes de la tête 42 en H sont en contact thermique avec une paroi latérale d'une canule respective.

La tête 42 comporte un moyen de serrage 44, tel qu'une griffe, agencée sur chaque aile du H, coopérant avec les bords de la cavité 43 du raccord mâle 15, pour fiabiliser l'insertion de la tête 42 dans la cavité 43.

La tête 42 et le clip 34 sont assemblés par une barrette de l'organe thermoconducteur 39, affinant localement l'organe thermoconducteur 39 pour autoriser la déformation entre le clip 34 et la tête 42, facilitant ainsi le montage de l'organe thermoconducteur 39 au réseau.

Au montage, l'organe thermoconducteur 39 est mis en contact thermique avec le raccord mâle 15 après le raccordement de celui-ci aux canaux de circulation de la conduite hydraulique secondaire 8 (figure 18).

Le moyen de retenue participe ainsi au transfert de chaleur tout en fixant simplement et de manière réversible l'organe thermoconducteur 39. L'organe thermoconducteur 39 assure ainsi le transfert de chaleur par conduction entre les conducteurs chauffants 5, 6 et le raccord mâle 15. La chaleur des conducteurs chauffants 5, 6 et celle emmagasinée par le manchon 3 est récupérée par le clip 34 pour réchauffer le raccord mâle 15.

## Revendications

1. Dispositif de distribution de liquide lave-glace de balais d'essuie-glace de véhicule automobile, comportant un réseau de distribution de liquide lave-glace ayant :
- au moins une conduite hydraulique (7, 8) comportant au moins un canal de circulation de liquide lave-glace,
- au moins un raccord hydraulique (9, 10, 11, 15) raccordé au canal de circulation, ledit dispositif de distribution comportant en outre au moins un organe thermoconducteur (16 ; 22 ; 31 ; 33 ; 39), en contact thermique d'une part avec au moins un raccord hydraulique (9, 10, 11, 15), et d'autre part avec un élément chauffant (5, 6, 21) du dispositif de distribution, ledit organe thermoconducteur (16 ; 22 ; 31 ; 33 ; 39) comportant un moyen de retenue propre pour maintenir ledit organe thermoconducteur (16 ; 22 ; 31 ; 33 ; 39) au réseau de distribution de liquide lave-glace, et étant en contact avec deux faces opposées du raccord hydraulique, le dispositif de distribution est **caractérisé en ce que** ledit organe thermoconducteur (16 ; 22 ; 31 ; 33 ; 39) est amovible et **en ce que** le moyen de retenue comporte au moins une paire de pattes élastiques (27, 28) formant pince coopérant avec au moins un raccord hydraulique (10).

2. Dispositif de distribution selon la revendication 1, **caractérisé en ce que** ledit organe thermoconducteur (16 ; 22 ; 31 ; 33 ; 39) est formé d'une seule pièce.

3. Dispositif de distribution selon la revendication 1, **caractérisé en ce que** le moyen de retenue comporte au moins un clip (17 ; 34) configuré pour s'emboîter élastiquement sur une conduite hydraulique (7, 8) du réseau de distribution.

4. Dispositif de distribution selon la revendication 1, **caractérisé en ce que** les extrémités des pattes élastiques (27, 28) sont conformées en capots (29) pour coopérer par emboîtement élastique avec au moins un raccord hydraulique (10).

5. Dispositif de distribution selon l'une des revendications précédentes, **caractérisé en ce que** ledit raccord hydraulique est un raccord de dérivation (10) pouvant comporter un clapet anti-retour.

6. Dispositif de distribution selon l'une des revendications 1 à 4, **caractérisé en ce que** ledit raccord hydraulique est un adaptateur (11) raccordant au moins un canal de circulation d'une conduite hydraulique (8) à au moins un raccord de dérivation (10).

7. Dispositif de distribution selon la revendication 6, **caractérisé en ce que** ledit moyen de retenue de l'organe thermoconducteur (33) comporte au moins un arceau de verrouillage (36) configuré pour s'emboîter élastiquement autour de l'adaptateur (11).

8. Dispositif de distribution selon l'une des revendications 1 à 4, **caractérisé en ce que** le raccord hydraulique est un raccord mâle (15) permettant de raccorder au moins un canal de circulation d'une conduite hydraulique (8) à un balai d'essuie-glace (2).

9. Dispositif de distribution selon l'une des revendications précédentes, **caractérisé en ce que** ledit organe thermoconducteur comporte un logement recevant l'élément chauffant (21).

10. Dispositif de distribution selon l'une des revendications 1 à 8, **caractérisé en ce que** ledit élément chauffant est formé par des conducteurs chauffants (5, 6) se prolongeant hors du manchon de la conduite hydraulique (7,8).

11. Dispositif de distribution selon la revendication 10, **caractérisé en ce que** ledit organe thermoconducteur (31) comporte une protubérance (32) autour de laquelle s'enroulent les conducteurs chauffants (5, 6).

12. Dispositif de distribution selon la revendication 10, **caractérisé en ce que** le moyen de retenue de l'organe thermoconducteur est en contact thermique avec les conducteurs chauffants (5, 6).

13. Dispositif de distribution selon l'une des revendications précédentes, **caractérisé en ce qu'**il comporte une interface thermique (25) interposée entre ledit organe thermoconducteur (22) et ledit élément chauffant (21), l'interface thermique (25) enrobant de préférence ledit élément chauffant (21).

14. Dispositif de distribution selon l'une des revendications précédentes, **caractérisé en ce que** ladite conduite hydraulique (7, 8) comporte deux canaux de circulation.

15. Dispositif de distribution selon la revendication 14, **caractérisé en ce que** ledit organe thermoconducteur présente une languette thermoconductrice (19 ; 23) configurée pour s'insérer entre deux raccords hydrauliques (10).

16. Dispositif de distribution selon la revendication 15, **caractérisé en ce que** la languette thermoconductrice (19 ; 23) est formée par deux plaques (19a, 19b ; 23a, 23b) en contact thermique avec une face d'un raccord hydraulique (10) respectif.

17. Dispositif de distribution selon l'une des revendications 14 ou 15, prise ensemble avec l'une des revendications 1 ou 4, **caractérisé en ce que** les pattes élastiques (27, 28) du moyen de retenue sont agencées symétriquement de part et d'autre de la languette thermoconductrice (19 ; 23) agencée au centre.

18. Dispositif de distribution selon les revendications 18 et 14 prises ensemble, **caractérisé en ce que** l'organe thermoconducteur (39) comporte une tête (42) conformée en « H » configurée pour s'insérer entre deux canules d'un raccord mâle (15).

## Patentansprüche

1. Scheibenwaschflüssigkeitsversorgungsvorrichtung von Scheibenwischern eines Kraftfahrzeugs, die ein Scheibenwaschflüssigkeitsversorgungsnetz umfasst, das Folgendes aufweist:
- mindestens eine Hydraulikleitung (7, 8), die mindestens einen Scheibenwaschflüssigkeitszirkulationskanal umfasst,
- mindestens einen Hydraulikanschluss (9, 10, 11, 15), der mit dem Zirkulationskanal verbunden ist, wobei die Versorgungsvorrichtung ferner mindestens ein wärmeleitendes Organ (16; 22; 31; 33; 39) umfasst, das einerseits mit mindestens einem Hydraulikanschluss (9, 10, 11, 15) und andererseits mit einem Heizelement (5, 6, 21) der Versorgungsvorrichtung in thermischem Kontakt ist, wobei das wärmeleitende Organ (16; 22; 31; 33; 39) ein eigenes Haltemittel umfasst, um das wärmeleitende Organ (16; 22; 31; 33; 39) an dem Scheibenwaschflüssigkeitsversorgungsnetz zu halten, und mit zwei entgegengesetzten Seiten des Hydraulikanschlusses in Kontakt ist,
wobei die Versorgungsvorrichtung **dadurch gekennzeichnet ist, dass** das wärmeleitende Organ (16; 22; 31; 33; 39) abnehmbar ist und dass das Haltemittel mindestens ein Paar elastische Laschen (27, 28) umfasst, das eine Klammer bildet, die mit mindestens einem Hydraulikanschluss (10) zusammenwirkt.

2. Versorgungsvorrichtung nach Anspruch 1, **dadurch gekennzeichnet, dass** das wärmeleitende Organ (16; 22; 31; 33; 39) einstückig ausgebildet ist.

3. Versorgungsvorrichtung nach Anspruch 1, **dadurch gekennzeichnet, dass** das Haltemittel mindestens einen Clip (17; 34) umfasst, der dazu konfiguriert ist, auf einer Hydraulikleitung (7, 8) des Versorgungsnetzes elastisch einzurasten.

4. Versorgungsvorrichtung nach Anspruch 1, **dadurch gekennzeichnet, dass** die Enden der elastischen Laschen (27, 28) als Abdeckungen (29) ausgebildet sind, um durch elastisches Einrasten mit mindestens einem Hydraulikanschluss (10) zusammenzuwirken.

5. Versorgungsvorrichtung nach einem der vorhergehenden Ansprüche, **dadurch gekennzeichnet, dass** der Hydraulikanschluss ein Abzweiganschluss (10) ist, der eine Rückschlagklappe umfassen kann.

6. Versorgungsvorrichtung nach einem der Ansprüche 1 bis 4, **dadurch gekennzeichnet, dass** der Hydraulikanschluss ein Adapter (11) ist, der mindestens einen Zirkulationskanal einer Hydraulikleitung (8) mit mindestens einem Abzweiganschluss (10) verbindet.

7. Versorgungsvorrichtung nach Anspruch 6, **dadurch gekennzeichnet, dass** das Haltemittel des wärmeleitenden Organs (33) mindestens einen Verriegelungsbügel (36) umfasst, der dazu konfiguriert ist, elastisch um den Adapter (11) einzurasten.

8. Versorgungsvorrichtung nach einem der Ansprüche 1 bis 4, **dadurch gekennzeichnet, dass** der Hydraulikanschluss ein Steckanschluss (15) ist, der es gestattet, mindestens einen Zirkulationskanal einer Hydraulikleitung (8) mit einem Scheibenwischer (2) zu verbinden.

9. Versorgungsvorrichtung nach einem der vorhergehenden Ansprüche, **dadurch gekennzeichnet, dass** das wärmeleitende Organ eine Aufnahme umfasst, die das Heizelement (21) aufnimmt.

10. Versorgungsvorrichtung nach einem der Ansprüche 1 bis 8, **dadurch gekennzeichnet, dass** das Heizelement aus Heizleitern (5, 6) gebildet ist, die sich bis außerhalb der Muffe der Hydraulikleitung (7, 8) erstrecken.

11. Versorgungsvorrichtung nach Anspruch 10, **dadurch gekennzeichnet, dass** das wärmeleitende Organ (31) einen Vorsprung (32) umfasst, um den die Heizleiter (5, 6) gewickelt sind.

12. Versorgungsvorrichtung nach Anspruch 10, **dadurch gekennzeichnet, dass** das Haltemittel des wärmeleitenden Organs mit den Heizleitern (5, 6) in thermischem Kontakt ist.

13. Versorgungsvorrichtung nach einem der vorhergehenden Ansprüche, **dadurch gekennzeichnet, dass** sie eine Wärmeschnittstelle (25) umfasst, die zwischen das wärmeleitende Organ (22) und das Heizelement (21) eingefügt ist, wobei die Wärmeschnittstelle (25) das Heizelement (21) vorzugsweise umhüllt.

14. Versorgungsvorrichtung nach einem der vorhergehenden Ansprüche, **dadurch gekennzeichnet, dass** die Hydraulikleitung (7, 8) zwei Zirkulationskanäle umfasst.

15. Versorgungsvorrichtung nach Anspruch 14, **dadurch gekennzeichnet, dass** das wärmeleitende Organ eine wärmeleitende Zunge (19; 23) aufweist, die dazu konfiguriert ist, zwischen zwei Hydraulikanschlüsse (10) eingeschoben zu werden.

16. Versorgungsvorrichtung nach Anspruch 15, **dadurch gekennzeichnet, dass** die wärmeleitende Zunge (19; 23) aus zwei Platten (19a, 19b; 23a, 23b) gebildet ist, die mit einer Seite eines jeweiligen Hydraulikanschlusses (10) in thermischem Kontakt sind.

17. Versorgungsvorrichtung nach einem der Ansprüche 14 oder 15, zusammen mit einem der Ansprüche 1 oder 4, **dadurch gekennzeichnet, dass** die elastischen Laschen (27, 28) des Haltemittels symmetrisch auf beiden Seiten der mittig angeordneten wärmeleitenden Zunge (19; 23) angeordnet sind.

18. Versorgungsvorrichtung nach den beiden Ansprüchen 8 und 14, **dadurch gekennzeichnet, dass** das wärmeleitende Organ (39) einen "H"-förmig ausgebildeten Kopf (42) umfasst, der dazu konfiguriert ist, zwischen zwei Kanülen eines Steckanschlusses (15) eingeschoben zu werden.

## Claims

1. Motor vehicle windscreen wiper fluid distribution device, comprising a windscreen washer fluid distribution network having:
- at least one hydraulic duct (7, 8) comprising at least one windscreen washer fluid circulation channel,
- at least one hydraulic coupling (9, 10, 11, 15) coupled to the circulation channel,
said distribution device further comprising at least one heat-conducting member (16; 22; 31; 33; 39), in thermal contact on one side with at least one hydraulic coupling (9, 10, 11, 15), and on the other side with a heating element (5, 6, 21) of the distribution device, said heat-conducting member (16; 22; 31; 33; 39) comprising a retaining means specifically for securing said heat-conducting member (16; 22; 31; 33; 39) to the windscreen washer fluid distribution network, and being in contact with two opposite faces of the hydraulic coupling, the distribution device is **characterized in that** said heat-conducting member (16; 22; 31; 33; 39) is removable and **in that** the retaining means comprises at least one pair of elastic tabs (27, 28) forming a clamp cooperating with at least one hydraulic coupling (10).

2. Distribution device according to Claim 1, **characterized in that** said heat-conducting member (16; 22; 31; 33; 39) is formed of a single piece.

3. Distribution device according to Claim 1, **characterized in that** the retaining means comprises at least one clip (17; 34) configured to be fitted elastically onto a hydraulic duct (7, 8) of the distribution network.

4. Distribution device according to Claim 1, **characterized in that** the ends of the elastic tabs (27, 28) are shaped as caps (29) to cooperate by elastic fitting with at least one hydraulic coupling (10) .

5. Distribution device according to one of the preceding claims, **characterized in that** said hydraulic coupling is a bypass coupling (10) that can comprise a non-return valve.

6. Distribution device according to one of Claims 1 to 4, **characterized in that** said hydraulic coupling is an adapter (11) coupling at least one circulation channel of a hydraulic duct (8) to at least one bypass coupling (10).

7. Distribution device according to Claim 6, **characterized in that** said retaining means of the heat-conducting member (33) comprises at least one locking arc (36) configured to be fitted elastically around the adapter (11).

8. Distribution device according to one of Claims 1 to 4, **characterized in that** the hydraulic coupling is a male coupling (15) making it possible to couple at least one circulation channel of a hydraulic duct (8) to a windscreen wiper (2).

9. Distribution device according to one of the preceding claims, **characterized in that** said heat-conducting member comprises a housing receiving the heating element (21).

10. Distribution device according to one of Claims 1 to 8, **characterized in that** said heating element is formed by heating conductors (5, 6) that extend out of the sleeve of the hydraulic duct (7, 8).

11. Distribution device according to Claim 10, **characterized in that** said heat-conducting member (31) comprises a protuberance (32) around which the heating conductors (5, 6) are wound.

12. Distribution device according to Claim 10, **characterized in that** the retaining means of the heat-conducting member is in thermal contact with the heating conductors (5, 6).

13. Distribution device according to one of the preceding claims, **characterized in that** it comprises a thermal interface (25) interposed between said heat-conducting member (22) and said heating element (21), the thermal interface (25) preferably coating said heating element (21).

14. Distribution device according to one of the preceding claims, **characterized in that** said hydraulic duct (7, 8) comprises two circulation channels.

15. Distribution device according to Claim 14, **characterized in that** said heat-conducting member has a heat-conducting tongue (19; 23) configured to be inserted between two hydraulic couplings (10).

16. Distribution device according to Claim 15, **characterized in that** the heat-conducting tongue (19; 23) is formed by two plates (19a, 19b; 23a, 23b) in thermal contact with a face of a respective hydraulic coupling (10).

17. Distribution device according to one of Claims 14 or 15, taken together with one of Claims 1 or 4, **characterized in that** the elastic tabs (27, 28) of the retaining means are arranged symmetrically on either side of the heat-conducting tab (19; 23) arranged at the centre.

18. Distribution device according to Claims 8 and 14 taken together, **characterized in that** the heat-conducting member (39) comprises an "H" shaped head (42) configured to be inserted between two nozzles of a male coupling (15).
